# EUROPÄISCHE PATENTSCHRIFT

(11) **EP 1 926 789 B1**
(45) Veröffentlichungstag und Bekanntmachung des Hinweises auf die Patenterteilung: **26.06.2019**
(21) Anmeldenummer: 06777067.7
(22) Anmeldetag: 25.08.2006
(51) Int. Cl.: C09D 183/16

(54) **POLYSILAZANE ENTHALTENDE BESCHICHTUNGEN FÜR METALL- UND POLYMEROBERFLÄCHEN**
COATINGS CONTAINING POLYSILAZANES FOR METAL AND POLYMER SURFACES
REVETEMENTS CONTENANT DU POLYSILAZANE POUR DES SURFACES METALLIQUES ET POLYMERES

(30) Priorität: 08.09.2005 DE 102005042944
(43) Veröffentlichungstag der Anmeldung: 04.06.2008
(73) Patentinhaber: AZ Electronic Materials (Luxembourg) S.à.r.l., 1648 Luxembourg (LU)
(72) Erfinder: BRAND, Stefan, 69493 Hirschberg-Leutershausen (DE); DIERDORF, Andreas, 65719 Hofheim (DE); LIEBE, Hubert, 65207 Wiesbaden (DE); WACKER, Andreas, 68165 Mannheim (DE)
(74) Vertreter: Rippel, Hans Christoph
(86) Internationale Anmeldenummer: PCT/EP2006/008352
(87) Internationale Veröffentlichungsnummer: WO 2007/028511

(56) Entgegenhaltungen:
- WO-A-2004/039904
- US-A1- 2003 083 453
- US-A1- 2003 164 113
- US-B1- 6 383 641

## Beschreibung

Die vorliegende Erfindung betrifft die Beschichtung auf Polysilazanbasis zur Herstellung einer leicht zu reinigenden Schutzbeschichtung für Metall- oder Kunststoffoberflächen. Besonders gute Eigenschaften zeigt die Beschichtung als Schutzbeschichtung für Felgen, insbesondere Aluminiumfelgen.

Der Einsatz von Aluminiumfelgen im Automobilbau hat in den vergangenen Jahren stark zugenommen. Zum einen bieten die leichteren Aluminiumfelgen gegenüber Stahlfelgen Gewichtsvorteile und ermöglichen damit Kraftstoffeinsparungen, der wesentliche Aspekt ist aber, dass Aluminiumfelgen vor allem aus optischen Gründen eingesetzt werden, da diese dem Fahrzeug ein hochwertiges und edles Aussehen verleihen.

Ein Nachteil der Aluminiumfelgen ist vor allem deren Anfälligkeit gegenüber Korrosion und ihre Neigung zur Verschmutzung. Außerdem fallen Kratzer auf der glänzenden Oberfläche einer Aluminiumfelge deutlich stärker auf als auf einer Stahlfelge. Aluminiumfelgen werden daher am Ende des Fertigungsprozesses mit einer Beschichtung versehen, die in der Regel aus einer Vorbehandlung des Aluminiums (Chromatierung oder chromatfrei), einer Grundierung, aus einem pigmentierten Basislack und zuletzt einer Klarlackschicht besteht. Diese aufwendige Beschichtung ist notwendig, um einen ausreichenden Korrosionsschutz zu gewährleisten. Trotz der Lackierung bereitet die Korrosion Probleme, z.B. durch die Verwendung von Streusalz im Winter. Schließlich frisst sich Bremsstaub, der sich auf der Aluminiumfelge niederschlägt mit der Zeit ebenfalls in die Lackierung hinein und lässt sich nicht mehr entfernen. Darüber hinaus kommt es bei der Benutzung von Schneeketten leicht zum Verkratzen der Aluminiumfelgen. Eine weitere Ursache für Kratzer ist die Reinigung der Aluminiumfelgen mit abrasiven Mitteln, wie Bürsten oder Spülschwämmen.

Zunehmend größere Verbreitung finden auch so genannte polierte oder glanzgedrehte Aluminiumfelgen, deren Oberfläche aus einer optisch ansprechenden, glänzenden Oberfläche aus reinem Aluminium besteht, die lediglich von einer dünnen Klarlackschicht geschützt ist, um den natürlichen Glanz des Aluminiums zu erhalten. Bei dieser Art von Felgen ist der Korrosionsschutz durch die dünne Klarlackschicht, die außerdem für das menschliche Auge möglichst nicht erkennbar sein soll, nur sehr schwer zu bewerkstelligen.

WO 02/088 269 A1 beschreibt die Verwendung einer Perhydropolysilazanlösung zur Herstellung hydrophiler, schmutzabweisender Oberflächen. Dort ist unter anderem auch die Verwendung im Automobilbereich (auf der Karosserie und den Felgen) beschrieben, wobei Perhydropolysilazanlösungen mit einem Gewichtsanteil von 0,3 bis 2 % empfohlen werden. In Beispiel 1 wird dabei eine stark verdünnte Lösung mit einem Gewichtsanteil von lediglich 0,5 % Perhydropolysilazan verwendet, mit der eine sehr dünne Beschichtung von ca. 0,2 Mikrometer Schichtdicke auf Stahl erhalten wird.

Dokumente WO 2004/039904, US 2003/0083453 und US 2003/0164113 offenbart eine Polysilazanlösung, die neben dem Polysilazan noch ein weiteres Bindemittel enthält.

Dokument US 6 383 641 offenbart die Verwendung vom Polysilazanen als permanent Beschichtung auf synthetische Polymereflächen, dadurch gekennzeichnet, daß es sich bei dem Polysilazan um eine Lösung eines inorganische oder organische Polysilazans handelt.

Dokument JP 05156176 beschreibt die Verwendung von Polysilazanen enthältende Lösung als Beschichtung auf Metalloberflächen wie Aluminiumoberflächen. Die Lösung enthält ein organisches Polysilazan und ein Fluorolefin Hartz.

Dokument JP 2004-209344 offenbart eine Photokatalysator-Zusammensetzung, die neben dem Photokatalysator und bestimmten Substanzen, die dessen Haftung verbessern sollen, eine Polysilazankomponente als Bindemittel enthält. Als Polysilazankomponente wird ein Perhydropolysilazan verwendet.

Eine solch dünne Beschichtung ist zum einen nicht geeignet, das Verkratzen der Lackoberfläche zu verhindern und außerdem nicht in der Lage, einen ausreichenden Korrosionsschutz zu gewährleisten, sowie das Einfressen von Bremsstaub zu unterbinden. Darüber hinaus reicht die dünne Schicht nicht aus, um die relativ inhomogene Klarlackschicht zu nivellieren und eine wirklich glatte, glasartige Oberfläche zu erhalten, die sich leicht reinigen lässt.

Der vorliegenden Erfindung lag die Aufgabe zugrunde, eine Beschichtung zu entwickeln, mit der es möglich ist, Felgen mit einer harten, kratzfesten Beschichtung zu versehen, die sich leichter reinigen lässt und die Aluminiumfelge vor Korrosion und vor dem Einfressen von Bremsstaub schützt.

Überraschenderweise wurde nun gefunden, dass man mit Polysilazanen ausreichend dicke Schutzschichten erzeugen kann, die die Felge vor Korrosion, Verkratzung und Einfressen des Bremsstaubes schützen und außerdem eine leichtere Reinigung der Felge ermöglichen.

Gegenstand der Erfindung ist daher die Verwendung von Polysilazanen zur Beschichtung von Metalloberflächen und Polymeren, gemäß Anspruch 1, enthaltend eine Lösung eines Polysilazans oder eine Mischung von Polysilazanen der allgemeinen Formel 1

-(SiR'R"-NR''')ₙ- (1)

wobei R' und R''' gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei R" gleich oder unterschiedlich für einen gegebenfalls substituierten Alkyl-, Aryl-, Vinyl oder (Trialkoxysilyl)alkyl-Rest steht, wobei es sich bei n um eine ganze Zahl handelt und n so bemessen ist, dass das Polysilazan ein zahlenmittleres Molekulargewicht von 150 bis 150.000 g/mol aufweist, in einem Lösenmittel, wobei die Lösung ein weiteres Bindemittel enthält und wobei das weitere Bindemittel gewählt wird aus der Gruppe der Celluloseether und -ester, natürlichen Harze, Aminoplaste, Alkylharze, Acrylharze, Polyester oder modifizierte Polyester, Epoxide, Polyisocyanate, blockierten Polyisocyanate und Polysiloxane.

Besonders geeignet sind dabei solche Polysilazane, in denen R' und R''' unabhängig voneinander für einen Rest aus der Gruppe Wasserstoff, Methyl, Ethyl, Propyl, iso-Propyl, Butyl, iso-Butyl, tert.-Butyl, Phenyl, Tolyl, Vinyl oder 3-(Triethoxysilyl)-propyl, 3-(Trimethoxysilylpropyl) stehen, wobei R" gleich oder unterschiedlich für einen gegebenfalls substituierten Alkyl-, Aryl-, Vinyl oder (Trialkoxysilyl)alkyl-Rest steht,

In einer weiteren bevorzugten Ausführungsform enthält die erfindungsgemäße Beschichtung Polysilazane der Formel (2),

-(SiR'R"-NR''')ₙ-(SiR*R**-NR***)ₚ - (2)

wobei R', R''', R*, und R*** unabhängig voneinander für Wasserstoff oder einen gegebenenfalls substituierten Alkyl-, Aryl-, Vinyl oder (Trialkoxysilyl)alkylRest stehen, wobei R" und R** gleich oder unterschiedlich für einen gegebenfalls substituierten Alkyl-, Aryl-, Vinyl oder (Trialkoxysilyl)alkyl-Rest stehen, wobei n und p so bemessen sind, dass das Polysilazan ein zahlenmittleres Molekulargewicht von 150 bis 150.000 g/mol aufweist. Insbesondere bevorzugt sind Verbindungen in denen
- R', R''' und R*** für Wasserstoff und R", R* und R** für Methyl stehen;
- R', R''' und R*** für Wasserstoff und R", R* für Methyl und R** für Vinyl stehen;
- R', R''', R* und R*** für Wasserstoff und R" und R** für Methyl stehen.

Ebenfalls bevorzugt werden Polysilazane der Formel (3) eingesetzt

-(SiR'R"-NR''')ₙ-(SiR*R**-NR***)ₚ-(SiR¹,R²-NR³)_{q}- (3)

wobei R', R''', R*, R***, R¹, und R³ unabhängig voneinander für Wasserstoff oder einen gegebenenfalls substituierten Alkyl-, Aryl-, Vinyl oder (Trialkoxysilyl)alkyl-Rest stehen, wobei R", R** und R² gleich oder unterschiedlich für einen gegebenfalls substituierten Alkyl-, Aryl-, Vinyl oder (Trialkoxysilyl)alkyl-Rest stehen, wobei n, p und q so bemessen sind, dass das Polysilazan ein zahlenmittleres Molekulargewicht von 150 bis 150.000 g/mol aufweist.

Insbesondere bevorzugt sind Verbindungen in denen
R', R''' und R*** für Wasserstoff und R", R*, R** und R² für Methyl, R³ für (Triethoxysilyl)propyl und R¹ für Alkyl oder Wasserstoff stehen.

Im allgemeinen beträgt der Anteil an Polysilazan im Lösemittel 1 bis 80 Gew.-% Polysilazans, bevorzugt 5 bis 50 Gew.-%, besonders bevorzugt 10 bis 40 Gew.-% enthält.

Aufgrund des organischen Anteils in der Polysilazanstruktur und des reduzierten Si-H Gehaltes im Bindemittel werden flexible Strukturen erhalten. Diese Systeme eignen sich insbesondere zum Beschichten von lackierten Oberflächen, da sie über einen höheren thermischen Ausdehnungskoeffizienten verfügen.

Als Lösemittel für die Polysilazanformulierung eignen sich besonders organische Lösemittel, die kein Wasser sowie keine reaktiven Gruppen (wie Hydroxyl- oder Amingruppen) enthalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.

Die Polysilazanformulierung enthält ein weiteres Bindemittel, wie sie üblicherweise zur Herstellung von Lacken verwendet werden. Dabei kann es sich beispielsweise um Celluloseether und -ester, wie Ethylcellulose, Nitrocellulose, Celluloseacetat oder Celluloseacetobutyrat, natürliche Harze wie Kautschuk oder Kolophoniumharze oder Kunstharze, wie Polymerisationsharze oder Kondensationsharze, beispielsweise Aminoplaste, insbesondere Harnstoff- und Melaminformaldehydharze, Alkydharze, Acrylharze, Polyester oder modifizierte Polyester, Epoxide, Polyisocyanate bzw. blockierte Polyisocyanate oder Polysiloxane handeln.

Weiterer Bestandteil der Polysilazanformulierung können Additive, die z.B. Viskosität der Formulierung, Untergrundbenetzung, Filmbildung, Gleitwirkung oder das Ablüftverhalten beeinflussen oder anorganische Nanopartikel wie beispielsweise SiO₂, TiO₂, ZnO, ZrO₂ oder Al₂O₃ sein.

Zusätzlicher Bestandteil der Polysilazanformulierung können Katalysatoren wie beispielsweise organische Amine, Säuren sowie Metalle oder Metallsalze oder Gemische dieser Verbindungen sein.

Katalysatoren werden vorzugsweise in Mengen von 0,001 bis 10 %, insbesondere 0,01 bis 6 %, besonders bevorzugt 0,1 bis 3 % bezogen auf das Gewicht des Polysilazans eingesetzt.

Beispiele für Aminkatalysatoren sind Ammoniak, Methylamin, Dimethylamin, Trimethylamin, Ethylamin, Diethylamin, Triethylamin, n-Propylamin, Isopropylamin, Di-n-propylamin, Di-isopropylamin, Tri-n-propylamin, n-Butylamin, Isobutylamin, Di-n-butylamin, Di-isobutylamin, Tri-n-butylamin, n-Pentylamin, Di-n-pentylamin, Tri-n-pentylamin, Dicyclohexylamin, Anilin, 2,4-Dimethylpyridin, 4,4-Trimethylenbis-(1-methylpiperidin), 1,4-diazabicyclo[2.2.2]octan, N,N-Dimethylpiperazin, cis-2,6-Dimethylpiperazin, trans-2,5-Dimethylpiperazin, 4,4-Methylenbis(cyclohexylamin), Stearylamin, 1,3-di-(4-Piperidyl)propan, N,N-Dimethylpropanolamin, N,N-Dimethylhexanolamin, N,N-Dimethyloctanolamin, N,N-Diethylethanolamin, 1-Piperidinethanol, 4-Piperidinol.

Beispiele für organische Säuren sind Essigsäure, Propionsäure, Buttersäure, Valeriansäure, Capronsäure.

Beispiele für Metalle und Metallverbindungen als Katalysatoren sind Palladium, Palladiumacetat, Palladiumacetylacetonat, Palladiumpropionat, Nickel, Nickelacetylacetonat, Silberpulver, Silberacetylacetonat, Platin, Platinacetylacetonat, Ruthenium, Rutheniumacetylacetonat, Rutheniumcarbonyle, Gold, Kupfer, Kupferacetylacetonat, Aluminiumacetylacetonat, Aluminiumtris(ethylacetoacetat).

Je nach verwendetem Katalysatorsystem kann die Gegenwart von Feuchtigkeit oder von Sauerstoff eine Rolle bei der Aushärtung der Beschichtung spielen. So kann durch Wahl eines geeigneten Katalysatorsystems die schnelle Härtung bei hoher oder niedriger Luftfeuchtigkeit bzw. bei hohem oder niederem Sauerstoffgehalt erreicht werden. Dem Fachmann sind diese Einflüsse bekannt und er wird durch geeignete Optimierungsmethoden die atmosphärischen Bedingungen entsprechend einstellen.

Das Applizieren dieser Polysilazanformulierung ist nicht nur auf Metalloberflächen begrenzt, sondern ist insbesondere auch für lackierte Oberflächen einsetzbar. Der Polysilazanlack kann hier sowohl direkt auf einen Basislack als auch auf einen konventionellen Klarlack appliziert werden. Bei diesen konventionellen Lackschichten kann es sich sowohl um lösungsmittelhaltige Lacksysteme als auch um Pulverlacke handeln. Aufgrund der glättenden Eigenschaften und der günstigen Oberflächenpolarität wird hier eine hochglänzende, leicht zu reinigende Oberfläche erzielt.

Die Beschichtung mit der Polysilazanformulierung kann durch Verfahren erfolgen wie sie üblicherweise in der Lackierung angewendet werden. Dabei kann es sich beispielsweise um Sprühen, Tauchen oder Fluten handeln. Anschließend kann eine thermische Nachbehandlung erfolgen, um die Aushärtung der Beschichtung zu beschleunigen. Je nach verwendeter Polysilazanformulierung und Katalysator erfolgt die Aushärtung bereits bei Raumtemperatur, kann aber durch Erhitzen beschleunigt werden. So ist es möglich die Polysilazanschicht bei 170°C innerhalb von 30 min auszuhärten.

Vor dem Aufbringen der Beschichtung kann zunächst eine Primärschicht aufgebracht werden, um beispielsweise die Haftung zu verbessern. Weiterer Gegenstand der Erfindung ist daher ein Verfahren zur Herstellung einer Schutzschicht auf einer Felge, wobei die gegebenenfalls Co-Bindemittel enthaltende Polysilazanlösung durch geeignete Verfahren wie beispielsweise Sprühen oder Tauchen auf die Felge gebracht und anschließend gehärtet wird. Die gehärtete Beschichtung weist eine Dicke von mindestens 1 Mikrometer, bevorzugt 2 bis 20 Mikrometer, besonders bevorzugt 3 bis 10 Mikrometer auf und gewährleistet einen hervorragenden Schutz der Oberflächen vor Korrosion und Verkratzung. Bei derartig beschichteten Felgen wird ein Einfressen von Bremsstaub verhindert, da es sich um einen hochtemperaturfesten Toplack handelt. Die Reinigung wird aufgrund der glatten Oberfläche erheblich erleichtert. Die erfindungsgemäße Beschichtung kann auch auf bereits lackierten Oberflächen, z.B. auf Felgen auf denen bereits Klarlack aufgebracht wurde, um die Felge zusätzlich vor Verkratzen, Korrosion oder dem Einfressen von Bremsstaub zu schützen, aufgebracht werden. Zusätzlich erhöht sich nach dem Aufbringen der Beschichtung der Glanzgrad gegenüber dem Klarlack. Alternativ ist es möglich, auf die Klarlackschicht zu verzichten und die Beschichtung bereits auf den pigmentierten Basislack aufzubringen, was die Einsparung eines Lackierschrittes ermöglicht.

Im Falle von nicht vorlackierten Materialien, wie beispielsweise polierten oder so genannten glanzgedrehten Aluminiumfelgen kann die Polysilazanlösung auch als einzige Schutzschicht verwendet werden, die den üblicherweise eingesetzten Klarlack ersetzt.

Somit ist es möglich eine Schutzschicht zu erzeugen, die eine deutlich geringere Dicke als die herkömmlichen Lackschichten aufweist, verbunden mit einem geringeren Verbrauch an Material und weniger Emission an Lösemitteln, die zusätzlich überlegene Eigenschaften als die herkömmlichen Lacke aufweist. Somit besitzt die Polysilazanbeschichtung erhebliche ökonomische und ökologische Vorteile.

Grundsätzlich erfolgt die Härtung der Beschichtung aufgrund der hohen Reaktivität des Polysilazans bereits bei Raumtemperatur und darunter, kann aber durch Temperaturerhöhung beschleunigt werden. Bevorzugt wird die Beschichtung bei einer Temperatur im Bereich von 10 bis 200°C, vorzugsweise 80 bis 170°C gehärtet. Die maximal mögliche Temperatur zur Härtung hängt im Wesentlichen vom Substrat ab, auf das die Beschichtung aufgebracht wird. Im Falle von Metallen, wie beispielsweise Aluminium können dies höhere Temperaturen, von 180 bis 200°C oder höher sein, sofern eloxierte Bereiche dies nicht zulassen. Wird die Beschichtung auf eine bereits vorhandene Lackschicht (entweder Basislack oder Klarlack) aufgebracht, empfiehlt es sich bei niedrigerer Temperatur zu arbeiten, so dass es nicht zur Erweichung der unteren Lackschicht kommt, bevorzugt bei 25 bis 180°C, besonders bevorzugt bei 80 bis 170°C. Lässt das Substrat ein Arbeiten bei 160-170°C zu, so erfolgt eine Aushärtung innerhalb von 15 - 30 min.

Des Weiteren hat die Luftfeuchtigkeit einen Einfluss auf die Aushärtung der Beschichtung. Bei höherer Luftfeuchtigkeit findet eine schnellere Aushärtung statt, was von Vorteil sein kann, umgekehrt bringt die Aushärtung in einer Atmosphäre mit nur wenig Luftfeuchtigkeit, beispielsweise in einem Trockenschrank, einen langsamen und gleichmäßigen Härtungsprozess. Daher kann die Aushärtung der erfindungsgemäßen Beschichtung bei einer relativen Luftfeuchtigkeit von 0 bis 100 % erfolgen.

Dem Beschichten mit der Perhydropolysilazanformulierung kann eine weitere Nachbehandlung folgen, mit der die Oberflächenenergie der Beschichtung angepasst wird. Damit können entweder hydrophile oder hydrophobe Oberflächen erzeugt werden, die die Beschmutzungsneigung beeinflussen.

### Beispiele

Die verwendeten Polysilazane lassen sich aus den entsprechenden Dichlorsilanen durch Reaktion mit Ammoniak herstellen. So erhält man z.B. bei Verwendung von Ammoniak, Dimethylchlorsilan und Methylchlorsilan ein statistisches Copolymer. Der Einbau von entsprechenden, netzwerkbildenden Strukturen gewährleistet ein Aushärten des Lacks.

In den folgenden Beispielen sind Teile und Prozentangaben auf das Gewicht bezogen.

Bei den Aluminiumfelgen handelt es sich um handelsübliche Aluminiumfelgen, die entweder einen lösungsmittelhaltigen Klarlack oder einen pulverförmigen Acrylatklarlack enthalten. Es wurden Teile dieser Felgen, die durch Zersägen ganzer Felgen erhalten wurden oder Testbleche mit einem vergleichbaren Lackaufbau als Substrate verwendet.

Die Beschichtung wurde entweder durch Sprühen mit einer handelsüblichen Lackierpistole oder durch Tauchen in einer handelsüblichen Tauchapparatur durchgeführt.

**Copolymere:**

| | -(CH₃)₂SiNH- | -(CH₃)HSiNH- | -(CH₃)₂SiNR- | -(CH₃)HSiNR- |
|---|---|---|---|---|
| Copolymer 1 | X | x | | |
| Copolymer 2 | x | x | x | x |
| Copolymer 3 | x | | x | |

### Herstellung der Lackformulierungen

**Formulierung 1**

| | |
|---|---|
| Copolymer 1 | 35-40 % |
| Polyacrylat | 0,5-1 % |
| Verlaufsadditiv | < 2,0 % |

Die Einzelkomponenten werden in Butylacetat gelöst und mit einem Dissolver homogenisiert. Die Menge des Butylacetats ist so zu berechnen, dass in der Summe 100 % Lackformulierung erhalten werdenu.

**Formulierung 2**

| | |
|---|---|
| Copolymer 1 | 35-40 % |
| Polyacrylat | 0,5-1 % |
| Verlaufsadditiv | < 2,0 % |
| AMEO | < 2,0 % |

Die Einzelkomponenten werden in Butylacetat gelöst und mit einem Dissolver homogenisiert. Die Menge des Butylacetats ist so zu berechnen, dass in der Summe 100 % Lackformulierung erhalten werden.

**Formulierung 3**

| | |
|---|---|
| Copolymer 2 | 35-40 % |
| Polyacrylat | 0,5-1 % |
| Verlaufsadditiv | < 2,0 % |
| AMEO | < 2,0 % |

Die Einzelkomponenten werden in Butylacetat gelöst und mit einem Dissolver homogenisiert. Die Menge des Butylacetats ist so zu berechnen, dass in der Summe 100 % Lackformulierung erhalten werden.

**Formulierung 4**

| | |
|---|---|
| Copolymer 2 | 35-40 % |
| Polyacrylat | 0,5-1 % |
| Verlaufsadditiv | < 2.0 % |

Die Einzelkomponenten werden in Butylacetat gelöst und mit einem Dissolver homogenisiert. Die Menge des Butylacetats ist so zu berechnen, dass in der Summe 100 % Lackformulierung erhalten werden.

**Formulierung 5**

| | |
|---|---|
| Copolymer 2 | 20-25 % |
| Polyacrylat | 0,5-1 % |
| Verlaufsadditiv | < 2,0 % |
| AMEO | < 2,0 % |
| Verdicker | < 5,0 % |

Die Einzelkomponenten werden in Butylacetat gelöst und mit einem Dissolver homogenisiert. Die Menge des Butylacetats ist so zu berechnen, dass in der Summe 100 % Lackformulierung erhalten werden.

**Formulierung 6**

| | |
|---|---|
| Copolymer 3 | 35-40 % |
| Polyacrylat | 0,5-1 % |
| Verlaufsadditiv | < 2,0 % |

Die Einzelkomponenten werden in Butylacetat gelöst und mit einem Dissolver homogenisiert. Die Menge des Butylacetats ist so zu berechnen, dass in der Summe 100 % Lackformulierung erhalten werden.

### Applikation der Lackformulierungen

Bei Applikation über eine Sprühpistole ist die Pistoleneinstellung so zu wählen, dass applizierte Lackmenge, Gleichmäßigkeit des Auftrags und Sprühstärke optimal sind. Diese Einstellungen sind dem Fachmann bekannt.

Die Applikation erfolgt auf lackierten Al-Probekörpern und Aluminiumfelgen, die einen entsprechenden Mehrschichtenaufbau haben. Die oberste Schicht ist hierbei ein Acrylatpulverlack, ein lösungsmittelhaltiger Klarlack oder wässriger Klarlack. Die Proben werden im Vorfeld entsprechend gut gereinigt und getrocknet.

Die Aushärtung erfolgt bei einer Probenkörpertemperatur von 170°C innerhalb von 25 min. Die Aufheizrate ist so zu wählen, dass das Lösungsmittel gleichmäßig verdampft.

| | Schichtstärke Si-Lack (µm) | Rauhigkeit Ra (µm) | Bremsstaubtest (Bewertung: siehe unten) | Kontaktwinkel (gegen Wasser) |
|---|---|---|---|---|
| Formulierung 2 | 4 | 0,12 | 3 | 105 |
| Formulierung 3 | 5 | 0,09 | 1 | 108 |
| Formulierung 4 | 3 | 0,11 | 2 | 106 |
| Formulierung 5 | 15 | 0,15 | 2 | 108 |
| Referenz 1 | ----- | 0,45 | 4 | 85 |
| Referenz 2 | ------ | 0,50 | 5 | 88 |

### Referenz 1:

Referenzfelge, aktueller Felgenlack, Mehrschichtaufbau mit Polyacrylatpulver Klarlack

### Referenz 2:

Referenzfelge, aktueller Felgenlack, Mehrschichtaufbau mit lösungsmittelhaltigem Klarlack

### Bremsstaubtest:

Bremstaub wird mit Wasser angeschlämmt und auf den Probekörper appliziert. Im Anschluss wird die Probe für 2 h bei 160°C gelagert, mit Wasser abgespült, leicht abgewischt und bewertet (Schulnoten).

## Patentansprüche

1. Verwendung von Polysilazanen als permanente Beschichtung auf Metalloberflächen, Polymeren und Lackierungen, **dadurch gekennzeichnet, dass** es sich bei dem Polysilazan um eine Lösung eines Polysilazans oder eine Mischung von Polysilazanen der allgemeinen Formel 1
-(SiR'R"-NR"')ₙ- (1)
in einem Lösungsmittel handelt, wobei R' und R"' gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei R" gleich oder unterschiedlich für einen gegebenenfalls substituierten Alkyl-, Aryl-, Vinyl oder (Trialkoxysilyl)alkyl-Rest steht, wobei es sich bei n um eine ganze Zahl handelt und n so bemessen ist, dass das Polysilazan ein zahlenmittleres Molekulargewicht von 150 bis 150.000 g/mol aufweist, wobei die Lösung ein weiteres Bindemittel enthält und wobei das weitere Bindemittel gewählt wird aus der Gruppe der Celluloseether und -ester, natürlichen Harze, Aminoplaste, Alkydharze, Acrylharze, Polyester oder modifizierte Polyester, Epoxide, Polyisocyanate, blockierten Polyisocyanate und Polysiloxane.

2. Verwendung gemäß Anspruch 1, **dadurch gekennzeichnet, dass** R' und R''' unabhängig voneinander für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)- propyl, 3-(Trimethoxysilylpropyl) stehen und R" für einen Rest aus der Gruppe Methyl, Ethyl, Propyl, iso-Propyl, Butyl, iso-Butyl, tert.-Butyl, Phenyl, Vinyl oder 3-(Triethoxysilyl)- propyl, 3-(Trimethoxysilylpropyl) steht.

3. Verwendung gemäß Anspruch 1 oder 2, **dadurch gekennzeichnet, dass** es sich bei dem Polysilazan um ein Polysilazan der Formel (2) handelt,
-(SiR'R"-NR''')ₙ-(SiR*R**-NR***)ₚ - (2)
wobei R', R''' R*, und R*** unabhängig voneinander für Wasserstoff oder einen gegebenenfalls substituierten Alkyl-, Aryl-, Vinyl oder (Trialkoxysilyl)alkyl-Rest stehen, wobei R" und R** unabhängig voneinander für einen gegebenenfalls substituierten Alkyl-, Aryl-, Vinyl oder (Trialkoxysilyl)alkyl-Rest stehen, wobei es sich bei n und p um eine ganze Zahl handelt und n so bemessen ist, dass das Polysilazan ein zahlenmittleres Molekulargewicht von 150 bis 150.000 g/mol aufweist.

4. Verwendung gemäß Anspruch 3, **dadurch gekennzeichnet, dass**
- R', R''' und R*** für Wasserstoff und R", R* und R** für Methyl stehen;
- R', R''' und R*** für Wasserstoff und R", R* für Methyl und R** für Vinyl stehen; oder
- R', R''', R* und R*** für Wasserstoff und R" und R** für Methyl stehen.

5. Verwendung gemäß Anspruch 1 oder 2, **dadurch gekennzeichnet, dass** es sich bei dem Polysilazan um ein Polysilazan der Formel (3) handelt,
-(SiR'R"-NR''')ₙ-(SiR*R**-NR***)ₚ-(SiR¹, R²-NR³)_{q}- (3)
wobei R', R''', R*, R***, R¹ und R³ unabhängig voneinander für Wasserstoff oder einen gegebenenfalls substituierten Alkyl-, Aryl-, Vinyl oder (Trialkoxysilyl)alkyl-Rest stehen, R", R** und R² unabhängig für einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.

6. Verwendung gemäß Anspruch 5, **dadurch gekennzeichnet, dass** R', R'" und R*** für Wasserstoff und R", R*, R** und R² für Methyl, R³ für (Triethoxysilyl)propyl und R¹ für Alkyl oder Wasserstoff stehen.

7. Verwendung nach mindestens einem der vorhergehenden Ansprüche **dadurch gekennzeichnet, dass** die Polysilazanlösung 1 bis 80 Gew.-% des Polysilazans, bevorzugt 5 bis 50 Gew.-%, besonders bevorzugt 10 bis 40 Gew.-% enthält.

8. Verwendung nach mindestens einem der vorhergehenden Ansprüche, **dadurch gekennzeichnet, dass** die Polysilazanlösung 0,001 bis 10 Gew.-% eines Katalysators enthält.

9. Verwendung nach Anspruch 8, **dadurch gekennzeichnet, dass** als Katalysatoren organische Amine, Säuren, Metalle, Metallsalze oder Gemische dieser Verbindungen eingesetzt werden.

10. Verwendung nach mindestens einem der vorhergehenden Ansprüche, **dadurch gekennzeichnet, dass** als Lösemittel wasserfreie organische Lösemittel, die keine reaktiven Gruppen enthalten, verwendet werden.

11. Verwendung nach mindestens einem der vorhergehenden Ansprüche, **dadurch gekennzeichnet, dass** die Formulierung Additive und Bindemittel enthält, die die Viskosität der Formulierung, die Untergrundbenetzung, die Filmbildung, die Gleitwirkung oder das Ablüftverhalten beeinflussen.

12. Verwendung nach mindestens einem der vorhergehenden Ansprüche, **dadurch gekennzeichnet, dass** die Formulierung anorganische Nanopartikel enthält.

13. Verwendung nach mindestens einem der vorhergehenden Ansprüche, **dadurch gekennzeichnet, dass** die Metalloberfläche die Oberfläche einer Aluminiumfelge ist.

14. Verfahren zur Herstellung einer permanenten Beschichtung auf Metall- und Polymeroberflächen, **dadurch gekennzeichnet, dass** man eine Lösung gemäß Anspruch 1 auf eine Metalloberfläche aufbringt und die Beschichtung aushärtet.

15. Verfahren gemäß Anspruch 14, **dadurch gekennzeichnet, dass** die Metalloberfläche die Oberfläche einer Aluminiumfelge ist.

16. Gegenstand mit einer Metalloberfläche, beschichtet mit einer Beschichtung gemäß mindestens einem der Ansprüche 1 bis 12.

17. Gegenstand mit einer Metalloberfläche gemäß Anspruch 16, **dadurch gekennzeichnet, dass** es sich bei der Metalloberfläche um Legierungen von Eisen, Stahl, verzinktem Stahl, Aluminium, Chrom, Nickel, Zink, Titan, Vanadium, Molybdän, Magnesium oder Kupfer handelt.

18. Gegenstand mit einer Polymeroberfläche beschichtet mit einer Beschichtung gemäß mindestens einem der Ansprüche 1 bis 12, **dadurch gekennzeichnet, dass** es sich bei dem Polymer um Polycarbonat, Polymethylmethacrylat, Polyetheretherketon, Polyethylen, Polypropylen, Polyamid, Polyethylenterephthalat handelt.

19. Gegenstand gemäß Anspruch 16, **dadurch gekennzeichnet, dass** es sich bei der Beschichtung um eine acrylatbasierte, epoxybasierte oder urethanbasierte Beschichtung handelt.

20. Gegenstand gemäß Anspruch 16 oder 17, **dadurch gekennzeichnet, dass** er eine Aluminiumfelge ist.

## Claims

1. Use of polysilazanes as a permanent coating on metal surfaces, polymers and coating systems, **characterized in that** the polysilazane is a solution of a polysilazane or a mixture of polysilazanes of the formula 1
-(SiR'R"-NR''')ₙ- (1)
in a solvent, where R' and R''' are identical or different and independently of one another are hydrogen or an unsubstituted or substituted alkyl, aryl, vinyl or (trialkoxysilyl)alkyl radical, R" in an identical or different manner being an unsubstituted or substituted alkyl, aryl, vinyl or (trialkoxysilyl)alkyl radical, n being an integer and having a value such that the polysilazane has a number-average molecular weight of 150 to 150 000 g/mol, the solution containing a further binder and the further binder being selected from the group of cellulose ethers and cellulose esters, natural resins, amino resins, alkyd resins, acrylic resins, polyesters or modified polyesters, epoxides, polyisocyanates, blocked polyisocyanates and polysiloxanes.

2. Use according to Claim 1, **characterized in that** R' and R''' independently of one another are a radical from the group of hydrogen, methyl, ethyl, propyl, isopropyl, butyl, isobutyl, tert-butyl, phenyl, vinyl or 3-(triethoxysilyl)propyl, 3-(trimethoxysilyl)propyl and R" is a radical from the group of methyl, ethyl, propyl, isopropyl, butyl, isobutyl, tert-butyl, phenyl, vinyl or 3-(triethoxysilyl)propyl, 3-(trimethoxysilyl)propyl.

3. Use according to Claim 1 or 2, **characterized in that** the polysilazane is a polysilazane of the formula (2)
-(SiR'R"-NR''')ₙ-(SiR*R**-NR***)ₚ- (2)
where R', R''', R* and R*** independently of one another are hydrogen or an unsubstituted or substituted alkyl, aryl, vinyl or (trialkoxysilyl)alkyl radical, R" and R** independently of one another being an unsubstituted or substituted alkyl, aryl, vinyl or (trialkoxysilyl)alkyl radical, n and p being an integer and n having a value such that the polysilazane has a number-average molecular weight of 150 to 150 000 g/mol.

4. Use according to Claim 3, **characterized in that**
- R', R''' and R*** are hydrogen and R'', R* and R** are methyl;
- R', R''' and R*** are hydrogen and R" and R* are methyl and R** is vinyl; or
- R', R''', R* and R*** are hydrogen and R" and R** are methyl.

5. Use according to Claim 1 or 2, **characterized in that** the polysilazane is a polysilazane of the formula (3)
-(SiR'R"-NR''')ₙ-(SiR*R**-NR***)ₚ-(SiR¹, R²-NR³)_{q}- (3)
where R', R''', R*, R***, R¹ and R³ independently of one another are hydrogen or an unsubstituted or substituted alkyl, aryl, vinyl or (trialkoxysilyl)alkyl radical, and R", R** and R² independently are an unsubstituted or substituted alkyl, aryl, vinyl or (trialkoxysilyl)alkyl radical n, p and q being integers and n having a value such that the polysilazane has a number-average molecular weight of 150 to 150 000 g/mol.

6. Use according to Claim 5, **characterized in that** R', R''' and R*** are hydrogen and R'', R*, R** and R² are methyl, R³ is (triethoxysilyl)propyl and R¹ is alkyl or hydrogen.

7. Use according to at least one of the preceding claims, **characterized in that** the polysilazane solution contains 1% to 80% by weight of the polysilazane, preferably 5% to 50% by weight, more preferably 10% to 40% by weight.

8. Use according to at least one of the preceding claims, **characterized in that** the polysilazane solution contains 0.001% to 10% by weight of a catalyst.

9. Use according to Claim 8, **characterized in that** organic amines, acids, metals, metal salts or mixtures of these compounds are used as catalysts.

10. Use according to at least one of the preceding claims, **characterized in that** anhydrous organic solvents which contain no reactive groups are used as solvents.

11. Use according to at least one of the preceding claims, **characterized in that** the formulation comprises additives and binders which influence formulation viscosity, substrate wetting, film formation, lubricity or the flash-off characteristics.

12. Use according to at least one of the preceding claims, **characterized in that** the formulation comprises inorganic nanoparticles.

13. Use according to at least one of the preceding claims, **characterized in that** the metal surface is the surface of an aluminum rim.

14. Method of producing a permanent coating on metal surfaces and polymer surfaces, **characterized in that** a solution according to Claim 1 is applied to a metal surface and the coating is cured.

15. Method according to Claim 14, **characterized in that** the metal surface is the surface of an aluminum rim.

16. Article with a metal surface coated with a coating according to at least one of Claims 1 to 12.

17. Article with a metal surface according to Claim 16, **characterized in that** the metal surface comprises alloys of iron, steel, galvanized steel, aluminum, chromium, nickel, zinc, titanium, vanadium, molybdenum, magnesium or copper.

18. Article with a polymer surface coated with a coating according to at least one of Claims 1 to 12, **characterized in that** the polymer comprises polycarbonate, polymethyl methacrylate, polyether ether ketone, polyethylene, polypropylene, polyamide or polyethylene terephthalate.

19. Article according to Claim 16, **characterized in that** the coating is an acrylate-based, epoxy-based or urethane-based coating.

20. Article according to Claim 16 or 17, **characterized in that** it is an aluminum rim.

## Revendications

1. Utilisation de polysilazanes en tant que revêtement permanent sur des surfaces métalliques, des polymères et des vernissages, **caractérisée en ce que** le polysilazane consiste en une solution d'un polysilazane ou un mélange de polysilazanes de formule générale 1 :
-(SiR'R"-NR''')ₙ- (1)
dans un solvant, R' et R"' étant identiques ou différents, et représentant indépendamment les uns des autres l'hydrogène ou un radical alkyle, aryle, vinyle ou (trialcoxysilyl)alkyle éventuellement substitué, les R'' représentant de manière identique ou différente un radical alkyle, aryle, vinyle ou (trialcoxysilyl)alkyle éventuellement substitué, n représentant un nombre entier et n étant déterminé de telle sorte que le polysilazane présente un poids moléculaire moyen en nombre de 150 à 150 000 g/mol, la solution contenant un liant supplémentaire, et le liant supplémentaire étant choisi dans le groupe constitué par les éthers et esters de cellulose, les résines naturelles, les aminoplastes, les résines alkydes, les résines acryliques, les polyesters ou les polyesters modifiés, les époxydes, les polyisocyanates, les polyisocyanates bloqués et les polysiloxanes.

2. Utilisation selon la revendication 1, **caractérisée en ce que** R' et R''' représentent indépendamment les uns des autres un radical du groupe constitué par hydrogène, méthyle, éthyle, propyle, iso-propyle, butyle, iso-butyle, tert.-butyle, phényle, vinyle ou 3-(triéthoxysilyl)propyle, 3-(triméthoxysilylpropyle), et R" représente un radical du groupe constitué par méthyle, éthyle, propyle, iso-propyle, butyle, iso-butyle, tert.-butyle, phényle, vinyle ou 3-(triéthoxysilyl)propyle, 3-(triméthoxysilylpropyle).

3. Utilisation selon la revendication 1 ou 2, **caractérisée en ce que** le polysilazane consiste en un polysilazane de formule (2) :
-(SiR'R"-NR''')ₙ-(SiR*R**-NR***)ₚ- (2)
dans laquelle R', R"', R* et R*** représentent indépendamment les uns des autres l'hydrogène ou un radical alkyle, aryle, vinyle ou (trialcoxysilyl)alkyle éventuellement substitué, R" et R** représentent indépendamment les uns des autres un radical alkyle, aryle, vinyle ou (trialcoxysilyl)alkyle éventuellement substitué, n et p représentent un nombre entier, et n est déterminé de telle sorte que le polysilazane présente un poids moléculaire moyen en nombre de 150 à 150 000 g/mol.

4. Utilisation selon la revendication 3, **caractérisée en ce que**
- R', R"' et R*** représentent hydrogène et R'', R* et R** représentent méthyle ;
- R', R''' et R*** représentent hydrogène et R'', R* représentent méthyle et R** représentent vinyle ; ou
- R', R''', R* et R*** représentent hydrogène et R'' et R** représentent méthyle.

5. Utilisation selon la revendication 1 ou 2, **caractérisée en ce que** le polysilazane consiste en un polysilazane de formule (3) :
-(SiR'R"-NR'''-(SiR*R**-NR***)ₚ-(SiR¹R²-NR³)_{q}- (3)
dans laquelle R', R''', R*, R***, R¹ et R³ représentent indépendamment les uns des autres l'hydrogène ou un radical alkyle, aryle, vinyle ou (trialcoxysilyl)alkyle éventuellement substitué, R", R** et R² représentent indépendamment les uns des autres un radical alkyle, aryle, vinyle ou (trialcoxysilyl)alkyle éventuellement substitué, n, p et q représentent un nombre entier, et n est déterminé de telle sorte que le polysilazane présente un poids moléculaire moyen en nombre de 150 à 150 000 g/mol.

6. Utilisation selon la revendication 5, **caractérisée en ce que** R', R''' et R*** représentent l'hydrogène, et R", R*, R** et R² représentent méthyle, R³ représente (triéthoxysilyl)propyle et R¹ représente alkyle ou hydrogène.

7. Utilisation selon au moins l'une quelconque des revendications précédentes, **caractérisée en ce que** la solution de polysilazane contient 1 à 80 % en poids du polysilazane, de préférence 5 à 50 % en poids, de manière particulièrement préférée 10 à 40 % en poids.

8. Utilisation selon au moins l'une quelconque des revendications précédentes, **caractérisée en ce que** la solution de polysilazane contient 0,001 à 10 % en poids d'un catalyseur.

9. Utilisation selon la revendication 8, **caractérisée en ce que** des amines organiques, des acides, des métaux, des sels de métaux ou des mélanges de ces composés sont utilisés en tant que catalyseurs.

10. Utilisation selon au moins l'une quelconque des revendications précédentes, **caractérisée en ce que** des solvants organiques anhydres qui ne contiennent pas de groupes réactifs sont utilisés en tant que solvants.

11. Utilisation selon au moins l'une quelconque des revendications précédentes, **caractérisée en ce que** la formulation contient des additifs et des liants, qui influencent la viscosité de la formulation, le mouillage du substrat, la formation d'un film, l'effet lubrifiant ou le comportement d'aération.

12. Utilisation selon au moins l'une quelconque des revendications précédentes, **caractérisée en ce que** la formulation contient des nanoparticules inorganiques.

13. Utilisation selon au moins l'une quelconque des revendications précédentes, **caractérisée en ce que** la surface métallique est la surface d'une jante en aluminium.

14. Procédé de fabrication d'un revêtement permanent sur des surfaces métalliques et polymères, **caractérisé en ce qu'**une solution selon la revendication 1 est appliquée sur une surface métallique et le revêtement est durci.

15. Procédé selon la revendication 14, **caractérisé en ce que** la surface métallique est la surface d'une jante en aluminium.

16. Article comprenant une surface métallique, revêtu avec un revêtement selon au moins l'une quelconque des revendications 1 à 12.

17. Article comprenant une surface métallique selon la revendication 16, **caractérisé en ce que** la surface métallique consiste en des alliages de fer, d'acier, d'acier galvanisé, d'aluminium, de chrome, de nickel, de zinc, de titane, de vanadium, de molybdène, de magnésium ou de cuivre.

18. Article comprenant une surface polymère revêtue avec un revêtement selon au moins l'une quelconque des revendications 1 à 12, **caractérisé en ce que** le polymère consiste en un polycarbonate, un polyméthacrylate de méthyle, une polyéther-éther-cétone, un polyéthylène, un polypropylène, un polyamide, un polytéréphtalate d'éthylène.

19. Article selon la revendication 16, **caractérisé en ce que** le revêtement consiste en un revêtement à base d'acrylate, à base d'époxy ou à base d'uréthane.

20. Article selon la revendication 16 ou 17, **caractérisé en ce qu'**il s'agit d'une jante en aluminium.
